# EUROPÄISCHE PATENTANMELDUNG

(11) **EP 1 437 780 A2**
(43) Veröffentlichungstag der Anmeldung: **14.07.2004**
(21) Anmeldenummer: 03029276.7
(22) Anmeldetag: 22.12.2003
(51) Int. Cl.: H01M 8/02

(54) **Brennstoffzellenmodul mit umrahmter Bipolarplatte**

(30) Priorität: 23.12.2002 DE 10261482
(71) Anmelder: BASF AKTIENGESELLSCHAFT, 67056 Ludwigshafen (DE)
(72) Erfinder: Bartholomeyzik, Willi, 67454 Hassloch (DE); Bohrmann, Gerhard, 67459 Böhl-Iggelheim (DE); Völker, Regina, 67549 Worms (DE)
(74) Vertreter: Isenbruck, Günter, Dr.

(57) **Zusammenfassung**

Die Erfindung bezieht sich auf ein Brennstoffzellenmodul (21, 22) für PEM-Brennstoffzellen-Stacks, enthaltend eine Bipolarplatte (2) und eine Membran-Elektroden-Einheit (MEA) (3), wobei die Bipolarplatte (2) einen umlaufenden Rahmen (5) aus einem elektrisch nichtleitenden Werkstoff und einen von dem Rahmen (5) umschlossenen, elektrisch leitfähigen inneren Bipolarplattenbereich (6) mit Kanälen für Gase und gegebenenfalls für Kühlmittel aufweist und wobei die MEA (3), die eine Polymerelektrolyt-Membran umfasst, durch eine Schweißnaht oder durch einem mit der MEA (3) teilweise überlappende umlaufende Elastomerdichtung anodenseitig an dem Rahmen (5) der Bipolarplatte (2) fixiert ist.

## Beschreibung

Die vorliegende Erfindung betrifft ein Brennstoffzellenmodul für Polymerelektrolyt-Membran (PEM) - Brennstoffzellenstacks, das eine Bipolarplatte und eine Membran-Elektroden-Einheit (MEA) umfasst, und ein Verfahren zu seiner Herstellung.

Bislang werden in Kraftfahrzeugen überwiegend Verbrennungsmotoren zum Antrieb eingesetzt, die Erdölprodukte als Treibstoff erfordern. Da die Ressourcen an Erdöl begrenzt sind und die Verbrennungsprodukte einen nachteiligen Umwelteinfluß haben können, wurden in den letzten Jahren verstärkt Forschungen nach alternativen Antriebskonzepten betrieben.

Die Nutzung von elektrochemischen Brennstoffzellen für mobile und stationäre Energieversorgungen findet dabei zunehmendes Interesse. Brennstoffzellen sind Energiewandler, die chemische Energie direkt in elektrische Energie umwandeln. In der Brennstoffzelle wird das Prinzip der Elektrolyse umgekehrt.

Derzeit existieren unterschiedliche Typen von Brennstoffzellen, deren Wirkungsprinzip allgemein auf der elektrochemischen Rekombination von Wasserstoff und Sauerstoff zum Endprodukt Wasser basiert. Sie lassen sich nach Art des verwendeten leitfähigen Elektrolyten, dem Betriebstemperaturniveau und realisierbaren Leistungsbereichen einordnen. Für automobile Anwendungen sind Polymer-Elektrolyt-Membranbrennstoffzellen besonders geeignet. Sie werden üblicherweise bei einer Temperatur im Bereich von 50° bis 90°C betrieben. Da die elektrische Spannung einer einzelnen Zelle für praktische Anwendungen viel zu niedrig ist, müssen mehrere solcher Zellen in Reihe geschaltet werden zu einem Brennstoffzellenstapel oder -stack. Zur Zeit liefern PEM-Brennstoffzellen im kompletten Stack üblicherweise elektrische Leistungen im Bereich von 1 bis 75 kW (PKW) und bis 250 kW (NFZ, Omnibus).

In einer PEM-Brennstoffzelle wird die elektrochemische Reaktion von Wasserstoff mit Sauerstoff zu Wasser durch die Einfügung einer protonenleitenden Membran zwischen die Anoden- und die Katodenelektrode in die beiden Teilschritte Reduktion und Oxidation aufgeteilt. Hierbei erfolgt eine Ladungstrennung, die als Spannungsquelle genutzt werden kann. Entsprechende Brennstoffzellen sind beispielsweise in "Brennstoffzellen-Antrieb, innovative Antriebskonzepte, Komponenten und Rahmenbedingungen", Skript zur Fachkonferenz der IIR Deutschland GmbH, 29. bis 31. Mai 2000 in Stuttgart, zusammengefasst.

Eine einzelne PEM-Brennstoffzelle weist einen symmetrischen Aufbau auf. Auf eine Polymermembran folgen beidseitig je eine Katalysatorschicht und Gasverteilerschicht, an die sich eine bipolare Platte anschließt. Stromkollektoren dienen zum Abgreifen der elektrischen Spannung, während Endplatten die Zudosierung der Reaktionsgase, Abführung der Reaktionsprodukte, Verpressung und Abdichten sicherstellen.

In einem Brennstoffzellen-Stack ist eine Vielzahl von Zellen in elektrischer Reihe zueinander gestapelt, wobei sie voneinander durch eine impermiable, elektrisch-leitfähige, bipolare Platte getrennt sind, die als Bipolarplatte bezeichnet wird. Die Bipolarplatte verbindet dabei zwei Zellen mechanisch und elektrisch. Da die Spannung einer einzelnen Zelle im Bereich von 1 V liegt, ist es für praktische Anwendungen notwendig, zahlreiche Zellen hintereinander zu schalten. Häufig werden bis zu 400 Zellen durch Bipolarplatten getrennt, aufeinander gestapelt. Die Zellen werden dabei so aufeinander gestapelt, dass die Sauerstoffseite der einen Zelle mit der Wasserstoffseite der nächsten Zelle über die Bipolarplatte verbunden ist. Die Bipolarplatte erfüllt dabei mehrere Funktionen. Sie dient zur elektrischen Verschaltung der Zellen, zur Zuführung und Verteilung von Reaktanden (Reaktionsgasen) und Kühlmittel und zur Trennung der Gasräume. Dabei muss eine Bipolarplatte folgende Eigenschaften erfüllen:
- chemische Beständigkeit gegen feuchte oxidierende und reduzierende Bedingungen
- Gasdichtheit
- hohe Leitfähigkeit
- geringe Übergangswiderstände
- Maßhaltigkeit
- niedrige Kosten in bezug auf Material und Fertigung
- Gestaltungsfreiheit
- hohe mechanische Belastbarkeit
- Korrosionsbeständigkeit
- geringes Gewicht.

Derzeit werden drei unterschiedliche Arten von Bipolarplatten verwendet. Zum einen werden metallische Bipolarplatten eingesetzt, die beispielsweise aus Edelstählen bzw. beschichteten anderen Werkstoffen, wie Aluminium oder Titan aufgebaut sind.

Metallische Werkstoffe zeichnen sich durch hohe Gasdichtigkeit, Maßhaltigkeit und hohe elektrische Leitfähigkeit aus.

Graphitische Bipolarplatten können durch Pressen oder Fräsen in die geeignete Form gebracht werden. Sie zeichnen sich durch chemische Beständigkeit und geringe Übergangswiderstände aus, haben aber neben einem hohen Gewicht ein unzureichendes mechanisches Verhalten.

Komposit-Materialien sind aus speziellen Kunststoffen aufgebaut, die leitfähige Füllstoffe, etwa auf Basis von Kohlenstoff, aufweisen.

In der WO 98/33224 sind Bipolarplatten aus Eisenlegierungen beschrieben, die hohe Anteile an Chrom und Nickel aufweisen.

Aus der GB-A-2326017 sind Bipolarplatten aus Kunststoffmaterial bekannt, die durch elektrisch leitfähige Füllstoffe, wie Kohlepulver leitfähig gemacht werden. Zusätzlich kann eine oberflächliche Metallbeschichtung vorliegen, die über die Kanten der Bipolarplatte eine elektrisch leitfähige Verbindung zwischen zwei Zellen ermöglicht.

Gemäß WO 98/53514 wird ein Polymerharz durch Eintragen eines elektrisch leitfähigen Pulvers und eines Hydrophilisiermittels behandelt. Mit Siliciumdioxidteilchen und Graphitpulver gefüllte Polymermassen werden als Bipolarplatten eingesetzt. Insbesondere finden dabei Phenolharze Anwendung.

Da Bipolarplatten kritische Funktionselemente von PEM-Brennstoffzellen-Stacks sind, die zu einem erheblichen Anteil zu den Kosten und dem Gewicht der Stacks beitragen, besteht große Nachfrage nach Bipolarplatten, die das vorstehend genannte Anforderungsprofil erfüllen und die Nachteile der bekannten Bipolarplatten vermeiden. Insbesondere sollte eine unaufwendige und kostengünstige Fertigung von Bipolarplatten möglich sein.

Ein wesentliches Problem bei der Konstruktion von Brennstoffzellen-Stacks ist die dauerhafte Abdichtung des Anodenraums. Aufgrund der hohen Reaktionsfreudigkeit von Wasserstoff ist dies neben guter Energieausnutzung auch aus Sicherheitsgründen notwendig. Aus der US 5,284,718 ist beispielsweise ein Verfahren zum Abdichten der Gasräume von PEM-Brennstoffzellen bekannt, bei dem Dichtungen aus Elastomer aufwendig gefertigt und zwischen der Polymerelektrolyt-Membran und der jeweiligen Bipolarplatte aus Graphit angeordnet werden.

Ein weiterer gasdichter Verbund aus Bipolarplatte und Membran-Elektroden-Einheit von PEM-Brennstoffzellen ist aus DE 198 29 142 A1 bekannt. Dabei wird der freie, nicht von Gasdiffusionsschichten bedeckte Membranrand einer Membran-Elektroden-Einheit mit der Bipolarplatte gasdicht verklebt. Die Klebung wird insbesondere mit einem aushärtbaren Silikon und Epoxydharz durchgeführt, wobei der Kleber auf der Membran haftet.

Ein weiteres Problem bei der Konstruktion von Brennstoffzellen-Stacks ist es, dass häufig die Dichtigkeit der einzelnen Brennstoffzellen erst am zusammengebauten Brennstoffzellen-Stack geprüft werden kann. Dies erschwert die Ortung von Undichtigkeiten.

Ein weiteres Problem ist bei den meisten Systemen, dass bei Bipolarplatten, die bis zum äußeren Rand elektrisch leitfähig sind, die Gefahr besteht, dass nach dem Zusammenbau zum Brennstoffzellen-Stack, beim Betrieb des Stacks durch den direkten Oberflächenkontakt der Bipolarplatten Kriechströme oder gar Kurzschlüsse entstehen können.

Ferner ergibt sich bei der Schichtung von einer Vielzahl von Einzelzellen zu einem Stack das Problem der Abdichtung der einzelnen Bipolarplatten gegeneinander, die meist mit hohem Konstruktions- und Kostenaufwand verbunden ist.

Zur Lösung dieser Probleme wird ein Brennstoffzellen-Modul für PEM-Brennstoffzellen-Stacks vorgeschlagen, das eine Bipolarplatte und eine Membran-Elektroden-Einheit (MEA) enthält, wobei die Bipolarplatte einen umlaufenden Rahmen aus einem elektrisch nichtleitenden Werkstoff und einen von dem Rahmen umschlossenen, elektrisch leitfähigen inneren Bipolarplattenbereich mit Kanälen für Gase und gegebenenfalls für Kühlmittel aufweist und wobei die Membran-Elektroden-Einheit, die eine Polymer-Elektrolyt-Membran umfasst, durch eine Schweißnaht oder durch eine mit der MEA teilweise überlappende umlaufende Elastomerdichtung anodenseitig an dem Rahmen der Bipolarplatte fixiert ist.

Die Einheit aus Polymerelektrolyt-Membran und Elektroden, einschließlich der jeweiligen Katalysatorschichten wird als Membran-Elektroden-Einheit (MEA) bezeichnet.

Unter einem Brennstoffzellen-Stack ist in diesem Zusammenhang ein Stapel aus mindestens zwei jeweils durch Bipolarplatten getrennten Brennstoffzellen zu verstehen. Zur Herstellung eines Brennstoffzellen-Stacks werden mindestens zwei erfindungsgemäße Brennstoffzellen-Module miteinander verbunden. Zwischen jeweils zwei Bipolarplatten liegt im Brennstoffzellen-Stack eine Einzelzelle vor. An beiden Enden weist ein Stack jeweils eine elektrisch leitfähige Elektrodenplatte anstelle einer Bipolarplatte auf.

Die erfindungsgemäße Bipolarplatte weist einen umlaufenden Rahmen aus einem elektrisch nichtleitenden Werkstoff und einen von dem Rahmen umschlossenen inneren Bipolarplattenbereich auf. Durch diese Konstruktion der Bipolarplatte wird eine Funktionstrennung vorgenommen. Der Rahmen dient zur Gestaltung der darin enthaltenen Zu- und Abführkanäle für Gase und Kühlmittel. Ferner können die erfindungsgemäßen Brennstoffzellenmodule über die Bipolarplattenrahmen miteinander verbunden und in einem Gehäuse befestigt werden, wobei in vorteilhafter Weise Kriechströme oder Kurzschlüsse zwischen den Bipolarplatten vermieden werden. Der innere Bipolarplattenbereich sorgt für die elektrische Leitfähigkeit der erfindungsgemäßen Bipolarplatte. Ferner enthält er auf seinen Oberflächen Kanäle für Gase, das sogenannte "flow-field", das die gasförmigen Reaktanden (z.B. Wasserstoff und Sauerstoff) über die Anoden- bzw. Katodenoberfläche verteilt. Der innere Bipolarplattenbereich enthält weiterhin integrierte Kanäle für Kühlmittel. Die Einzelzellen eines Stacks müssen bei zunehmender Leistungsdichte gekühlt werden. In vielen Fällen reicht wegen der begrenzten Wärmeübertragung eine reine Luftkühlung nicht aus. Eine Flüssigkeitskühlung, mit einem dem Verbrennungsmotor vergleichbaren Kühlkreislauf, wird deshalb erforderlich. Daher wird die Kühlung direkt an der aktiven Zellfläche (innerer Bipolarplattenbereich) vorgenommen, so dass eine unmittelbare Wärmeübertragung gewährleistet wird.

Gase und Flüssigkeiten werden dem inneren Bipolarplattenbereich vorzugsweise über Kanäle in dem Rahmen der Bipolarplatte zugeführt und über weitere Kanäle in dem Rahmen wieder abgeführt.

Die Membran-Elektroden-Einheit (MEA) ist bei dem erfindungsgemäßen Brennstoffzellenmodul anodenseitig durch eine Schweißnaht oder eine mit der MEA teilweise überlappende umlaufende Elastomerdichtung mit dem Rahmen der Bipolarplatte verbunden. Dadurch ergibt sich der Vorteil einer dauerhaften Abdichtung des Anodenraums. Ein weiterer Vorteil ist, dass an jedem einzelnen erfindungsgemäßen Brennstoffzellenmodul eine Dichtigkeitsprüfung durchgeführt werden kann und dies bereits vor dem Zusammenbau zum Brennstoffzellen-Stack. Insbesondere kann die besonders kritische anodenseitige Dichtigkeit der Verbindung zwischen Membran und Bipolarplatte hinsichtlich Wasserstoff geprüft werden. Somit wird die Ortung von Undichtigkeiten wesentlich erleichtert im Vergleich zur Prüfung eines gesamten Brennstoffzellen-Stacks.

Im Falle einer mit der MEA teilweise überlappenden Elastomerdichtung ergibt sich weiterhin der Vorteil, dass diese beim Verbinden der einzelnen erfindungsgemäßen Brennstoffzellenmodule zur Abdichtung der einzelnen Bipolarplatten gegeneinander dient. Folglich müssen keine weiteren aufwendigen Vorkehrungen für diese Abdichtung getroffen werden.

Als Material für die Elastomerdichtung eignet sich insbesondere ein thermoplastisches Elastomer (TPE). Thermoplastische Elastomere verhalten sich bei niedrigen Temperaturen wie ein chemisch vernetztes Silikon oder Polyurethan (sind somit elastisch) und lassen sich bei höheren Temperaturen wie ein Thermoplast warmformen (plastisch, da sich ihre physikalischen Vernetzungen bei hohen Temperaturen lösen und beim Abkühlen neu bilden).

Die erfindungsgemäßen Brennstoffzellenmodule weisen weiterhin den Vorteil auf, dass sie kosteneffizient zu einem Brennstoffzellen-Stack zusammengefügt werden können, wobei außerdem die Gefahr einer Beschädigung der empfindlichen Polymerelektrolyt-Membran bei der Montage (z.B. durch Knicken) erheblich verringert ist, dadurch dass die Polymerelektrolyt-Membran bereits an der Bipolarplatte fixiert ist.

In einer bevorzugten Ausführungsform der vorliegenden Erfindung enthält der innere Bipolarplattenbereich metallische Bleche, die Strukturen für die Gasverteilung und die Kühlung aufweisen. Die metallischen Bleche können leitfähige korrosionsbeständige Metalle oder Legierungen enthalten. Dabei kann es sich beispielsweise um Bleche aus Stahl mit einer korrosionsschützenden Beschichtung handeln. Die für die Gasverteilung und Kühlung notwendigen Strukturen werden vorzugsweise durch spanloses Umformen der metallischen Bleche erzeugt. Vorzugsweise enthält der innere Bipolarplattenbereich zwei aufeinanderliegende, insbesondere gewellte Metallbleche, zwischen denen die Kühlmittelkanäle und an denen katoden- bzw. anodenseitig die Kanäle für die Gasverteilung ausgebildet werden. Der elektrisch leitende Kontakt zwischen den metallischen Blechen kann dabei durch geeignete Verbindungsverfahren, z.B. Pressen, Schweißen oder Löten, hergestellt sein.

In einer bevorzugten Ausführungsform der vorliegenden Erfindung enthält der innere Bipolarplattenbereich ein elektrisch leitfähiges Polymer. Dabei handelt es sich entweder um ein Polymer, das selbst elektrisch leitfähig ist, oder das durch ein darin verteiltes elektrisch leitfähiges Material, durch eine Sprühbeschichtung mit Metallen, die durch Öffnungen in dem Polymer hindurchgreift, oder durch eine von ihm umschlossene elektrisch leitfähige Konstruktion (z.B. aus metallischen Blechen oder Stiften) elektrisch leitfähig ist. Beispielsweise kann einem Kunststoff zur Erhöhung der Leitfähigkeit ein nicht metallischer leitfähiger Stoff und/oder Metallfasern oder -pulver zugemischt werden. Ein Vorteil der Herstellung des inneren Bipolarplattenbereichs aus einem Polymer ist beispielsweise, dass das "flow-field" in einer beliebigen Geometrie, z.B. mit meanderförmig verlaufenden Kanälen, geformt werden kann. Dies kann beispielsweise durch Spritzgießen des Polymers erfolgen.

In weiteren Ausführungsformen der vorliegenden Erfindung enthält der innere Bipolarplattenbereich ein im Stand der Technik übliches Material, beispielsweise Graphit.

In einer bevorzugten Ausführungsform der vorliegenden Erfindung ist der in dem Rahmen enthaltene nichtleitende Werkstoff ein elektrisch nichtleitender, gegebenenfalls verstärkter Thermoplast oder Duroplast. Es können alle thermoplastischen oder duroplastischen Kunststoffe bei der Herstellung des Bipolarplattenrahmens eingesetzt werden, die gegen feuchte, oxidierende und reduzierende Bedingungen, wie sie in PEM-Brennstoffzellen herrschen, chemisch stabil sind. Zudem sollten sie gasdicht und maßhaltig sein. Beispiele geeigneter Materialien sind Polyphenylensulfid (PPS), Liquid Cristal-Polyester (LCP), Polyoxymethylen (POM), Polyaryletherketon (PAEK), Polyamid (PA), Polybutylenterephthalat (PBT), Polyphenylenoxid (PPO), Polypropylen (PP) oder Polyethersulfon (PES) oder andere technisch eingesetzte Kunststoffe.

Vorzugsweise wird der Rahmen aus dem nichtleitenden Werkstoff durch Spritzgießen an den inneren Bipolarplattenbereich angeformt. In einer bevorzugten Ausführungsform der vorliegenden Erfindung ist der Rahmen einstückig um den inneren Bipolarplattenbereich angeformt. Dies kann in vorteilhafter Weise in einem Arbeitsgang erfolgen. Insbesondere kann der Rahmen aus einem leicht verarbeitbaren, kostengünstigen Massenwerkstoff in beliebiger Geometrie durch ein Spritzgießverfahren gefertigt werden.

Des weiteren hat die vorliegende Erfindung ein Verfahren zur Herstellung eines erfindungsgemäßen Brennstoffzellenmoduls zum Gegenstand, wobei die Membran-Elektroden-Einheit (MEA) mit dem Rahmen durch ein Schweißverfahren verbunden wird.

Das zum Verbinden der MEA mit dem Rahmen verwendete Schweißverfahren ist vorzugsweise Laserschweißen. Beim Laserschweißen wird eine stoffschlüssige Verbindung zwischen zwei oder mehr Fügepartnern mittels Wärmeeinbringung durch einen Laserstrahl hergestellt. Der Laserstrahl durchdringt einen laserstrahltransparenten Fügepartner und trifft auf einen absorbierenden Fügepartner. Dort wird der Laserstrahl in Wärme umgewandelt und führt zur Plastifizierung. Durch die dabei entstehende örtliche Volumenzunahme entsteht ein flächiger Kontakt zum transparenten Fügepartner und durch die auftretende Wärmeleitung wird auch der transparente Fügepartner plastifiziert. Damit ist der Schweißprozeß der beiden durch eine Fixierungsvorrichtung gehaltenen Fügepartner abgeschlossen. Mögliche Verfahrensvarianten für das Laserdurchstrahl-Schweißen sind beispielsweise ein Abfahren einer zu schweißenden Kontur durch einen Laserstrahl, wobei der Laserstrahl auch robotergeführt werden kann, oder das definierte Ausrichten eines Laserstrahls und ein entsprechend der gewünschten Schweißnaht geführtes Werkstück.

Bei dem erfindungsgemäßen Verfahren werden die Werkstoffe vorzugsweise so gewählt, dass der Rahmen der Bipolarplatte laserstrahlabsorbierend und die daran zu befestigende Membran-Elektroden-Einheit zumindest in ihrem Randbereich laserstrahltransparent ist.

Weitere mögliche Schweißverfahren sind z.B. Ultraschallschweißen oder Wärmekontaktschweißen.

In einer bevorzugten Ausführungsform der vorliegenden Erfindung weist die Membran-Elektroden-Einheit in ihrem Randbereich einen Rand aus dem Material der Polymerelektrolyt-Membran auf, der mit dem Rahmen durch Laserschweißen verbunden wird.

Alle anderen, die Elektroden und Katalysatoren umfassenden Schichten, aus denen die Membran-Elektroden-Einheit aufgebaut ist, nehmen dabei eine kleinere Fläche als die Polymerelektrolyt-Membran ein, so dass die Polymerelektrolyt-Membran über diese Fläche mit ihrem festzuschweißenden Rand hinausragt. Bei dieser Ausführungsform ist das PEM-Material laserstrahltransparent und laserschweißfähig in Kombination mit dem laserstrahlabsorbierenden Rahmenmaterial.

Die Schweißnaht kann bei dieser bevorzugten Ausführungsform der vorliegenden Erfindung direkt im Anschluß an den inneren Bipolarplattenbereich an dem Rahmen angebracht werden. Somit braucht die MEA nur so groß gewählt zu werden, dass sie den Rahmen im wesentlichen mit einer Schweißnahtbreite abdeckt. Möglich ist hingegen auch das Anbringen der Schweißnaht im äußeren Randbereich des Rahmens, wobei die MEA bzw. PEM einen entsprechend großen Anteil der (gegebenenfalls die gesamte) Rahmenfläche abdecken muss.

Nach dem Anschweißen der MEA an den Rahmen der Bipolarplatte muss das erfindungsgemäße Brennstoffzellenmodul noch mit Dichtungen auf der Kathodenseite komplettiert werden, die im zusammengebauten Brennstoffzellen-Stack die Bipolarplattenrahmen gegeneinander abdichten. Diese Dichtungen sind vorzugsweise Elastomerdichtungen, die nach Fertigstellung des Rahmens auf diesen im Spritzgießverfahren aufgespritzt werden.

Gegenstand der vorliegenden Erfindung ist weiterhin ein Verfahren zur Herstellung eines erfindungsgemäßen Brennstoffzellenmoduls, wobei die Elastomerdichtung durch Spritzgießen eines Elastomers an den Rahmen angespritzt wird, so dass sie teilweise mit dem Rahmen stoffschlüssig und/oder formschlüssig verbunden wird und teilweise mit der auf dem Rahmen aufgelegten MEA überlappt. Dazu wird beispielsweise die Bipolarplatte gemeinsam mit der MEA in ein entsprechendes Formnest eingelegt und mit dem Elastomermaterial zur Herstellung der Elastomerdichtung umspritzt. Eine Kompatibilität des Elastomermaterials mit dem Rahmenmaterial zur Herstellung einer stoffschlüssigen Verbindung ist nicht unbedingt notwendig. Es ist ebenfalls möglich, eine formschlüssige Verbindung zwischen der Elastomerdichtung und dem Bipolarplattenrahmen herzustellen, beispielsweise indem der Rahmen entsprechend geformte Nuten oder Öffnungen enthält, die ebenfalls mit dem Elastomermaterial gefüllt werden und die Dichtung am Rahmen fixieren.

Die Elastomerdichtung überlappt teilweise mit der MEA, so dass sie diese an dem Rahmen fixiert, vorzugsweise ohne jedoch eine stoffschlüssige Verbindung mit der MEA einzugehen. Beim späteren Montieren eines Brennstoffzellen-Stacks wird die jeweilige Elastomerdichtung an die zugehörige MEA bzw. PEM gepresst und so eine dichte Verbindung hergestellt.

Vorzugsweise wird die Elastomerdichtung im äußeren Bereich des Rahmens angespritzt, so dass eine sichere Fixierung der MEA gewährleistet ist. Die MEA muss den Rahmen entsprechend weit überlappen.

Vorzugsweise dient die Elastomerdichtung hauptsächlich als Dichtung zwischen jeweils zwei miteinander verbundenen Bipolarplatten, wobei der Rahmen der einen Bipolarplatte eine umlaufende Nut enthalten kann, in die die Elastomerdichtung der anderen Bipolarplatte dichtend eingreift.

Das Spritzgießen der Elastomerdichtung und gegebenenfalls auch des Rahmens und/oder des inneren Bipolarplattenbereichs erlaubt die kostengünstige und einfache Herstellung auch komplexer geometrischer Formen und ist auch zur Massenproduktion des erfindungsgemäßen Brennstoffzellenmoduls geeignet.

Gegenstand der vorliegenden Erfindung ist weiterhin ein Brennstoffzellen-Stack mit mindestens zwei erfindungsgemäßen Brennstoffzellenmodulen, wobei die Brennstoffzellenmodule über die Rahmen miteinander verbunden sind und die Brennstoffzellenmodule gegeneinander über die Elastomerdichtung und/oder zusätzlich über an den Rahmen angebrachte Dichtungselemente gasdicht abgedichtet sind.

Die erfindungsgemäßen Brennstoffzellen-Stacks können beispielsweise zur Stromversorgung in mobilen und stationären Einrichtungen eingesetzt werden. Neben einer Hausversorgung kommen dabei insbesondere die Stromversorgung von Fahrzeugen, wie Land-, Wasser- und Luftfahrzeugen sowie autarken Systemen, wie Satelliten, in Betracht.

Anhand der Zeichnung wird die vorliegende Erfindung nachstehend näher erläutert.

Es zeigt:
- Figur 1: die Anoden- und die Katodenseite eines erfindungsgemäßen Brennstoffzellenmoduls mit angeschweißter MEA,
- Figur 2: Metallbleche, die im inneren Bipolarplattenbereich eines erfindungsgemäßen Brennstoffzellenmoduls eingesetzt werden,
- Figur 3: den Schnitt durch ein erfindungsgemäßes Brennstoffzellenmodul,
- Figur 4: einen Teil eines erfindungsgemäßen Brennstoffzellen-Stacks mit zwei Bipolarplatten,
- Figur 5: den Schnitt durch einen erfindungsgemäßen Brennstoffzellen-Stack gemäß Figur 4,
- Figur 6: die Anoden- und die Katodenseite einer weiteren Ausführungsform eines erfindungsgemäßen Brennstoffzellenmoduls mit einer die MEA überlappender Elastomerdichtung,
- Figur 7: einen Schnitt durch das Brennstoffzellenmodul gemäß Figur 6 im Bereich der Elastomerdichtung und
- Figur 8: einen Schnitt durch das Brennstoffzellenmodul gemäß Figur 6 im Bereich des Kühlmittelkanals.

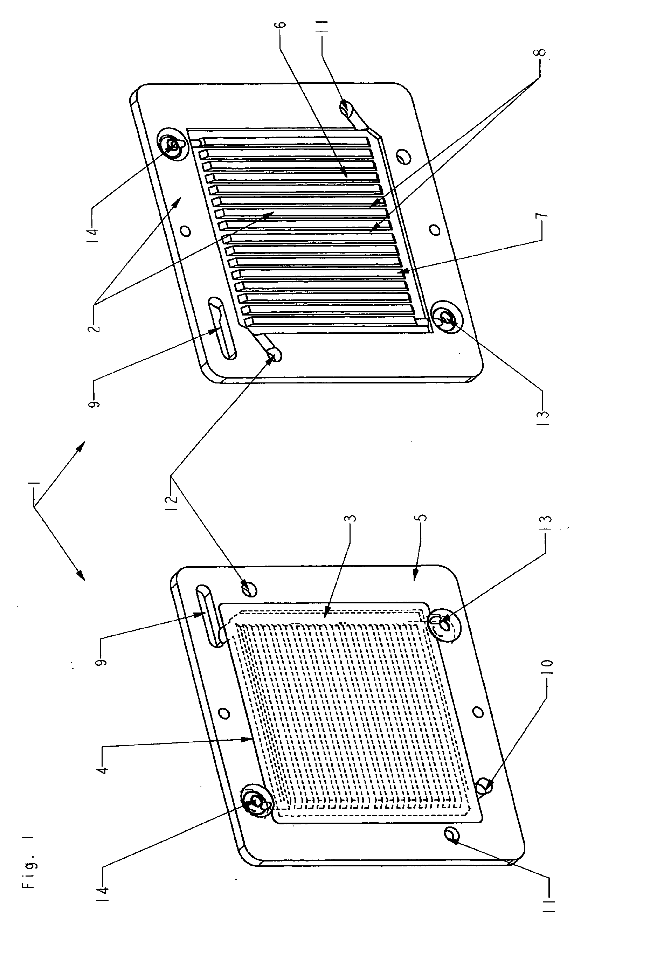

Figur 1 zeigt eine Ausführungsform eines erfindungsgemäßen Brennstoffzellenmoduls, bei dem die Membran-Elektroden-Einheit anodenseitig an den Bipolarplattenrahmen angeschweißt ist. In der linken Hälfte der Figur ist die Anodenseite, in der rechten Hälfte die Katodenseite dargestellt.

Das Brennstoffzellenmodul 1 umfasst eine Bipolarplatte 2 und eine Membran-Elektroden-Einheit (MEA) 3, die miteinander verbunden sind. Der Rand 4 der MEA 3, der insbesondere durch den Rand der Polymerelektrolyt-Membran gebildet wird, überlappt mit dem Rahmen 5 der Bipolarplatte 2. In diesem Überlappbereich befindet sich eine Schweißnaht, mit der die MEA 3 am Rahmen 5 fixiert ist. Diese Schweißnaht wurde vorzugsweise durch Laserschweißen hergestellt. Im inneren Bipolarplattenbereich 6 befindet sich ein Metalleinlegeteil 7 mit Kanälen 8 zum Verteilen der Gase. Im Inneren des Metalleinlegeteils 7 sind weitere (nicht an dieser Figur sichtbare) Kanäle für den Kühlmitteltransport enthalten. Der Bipolarplattenrahmen 5 weist Kanäle zum Zu- und Abführen von Flüssigkeiten und Gasen auf. Über einen ersten Eingang 9 kann beispielsweise H₂ zugeführt werden. Der Wasserstoff verteilt sich dann über die Kanäle 8 im inneren Bipolarplattenbereich 6 und der nicht für die Brennstoffzellen-Reaktion verbrauchte Wasserstoff wird über den ersten Ausgang 10 wieder abgeführt. Ebenso existiert ein zweiter Eingang 11 und Ausgang 12 für das andere an der Brennstoffzellen-Reaktion beteiligte Gas (z.B. O₂), das durch die Kanäle 8 auf der Katodenseite entlang der Oberfläche des inneren Bipolarplattenbereichs 6 geleitet wird. Ferner umfasst der Rahmen 5 weitere Kanäle 13, 14 für ein Kühlmittel, das durch das Innere des Metalleinlegeteils 7 strömt.

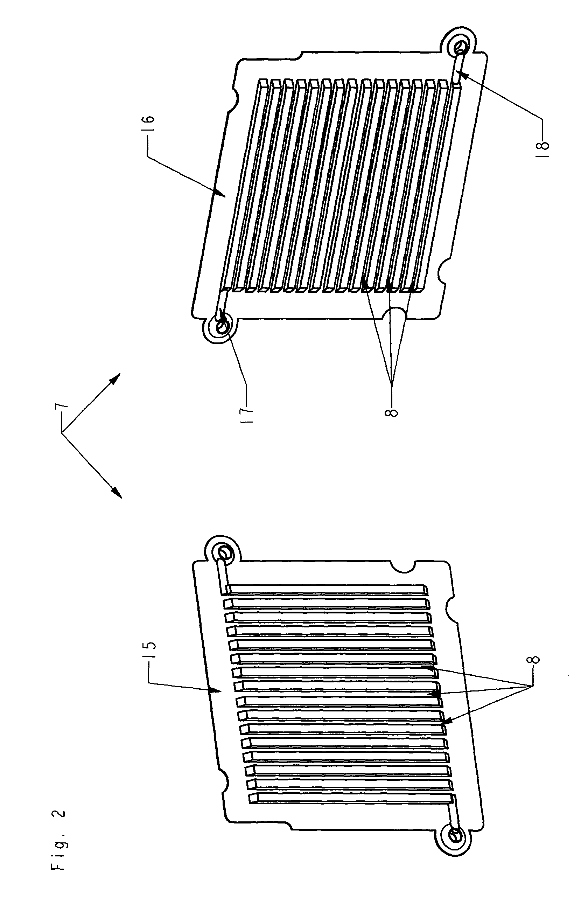

Figur 2 zeigt Metallbleche, die als Metalleinlegeteil im inneren Bipolarplattenbereich des erfindungsgemäßen Brennstoffzellenmoduls eingesetzt werden können.

Das Metalleinlegeteil 7 wird in dieser Figur in zwei Hälften 15, 16 zerlegt dargestellt. Die beiden Hälften 15, 16 werden zur Herstellung des Metalleinlegeteils zusammengeklappt und durch ein Verbindungsverfahren wie Pressen, Schweißen oder Löten verbunden, so dass ein guter elektrischer Kontakt zwischen den beiden Hälften 15, 16 gewährleistet ist. Jede Hälfte 15, 16 weist Kanäle 8 auf, die zum Versorgen der Zellflächen mit den an der Brennstoffzellenreaktion beteiligten Reaktanden vorgesehen sind. Im zusammengebauten Zustand umhüllen sie einen weitgehend geschlossenen Raum, in dem halbschalige Elemente 17, 18 (in Figur 2 nur von Aussen gezeigt) zur Verbindung mit dem Rahmen der Bipolarplatte vorgesehen sind. Über den Rahmen und die halbschaligen Elemente 17, 18 erfolgt die Einbringung und Ableitung von Kühlmittel in den im Metalleinlegeteil enthaltenen geschlossenen Raum.

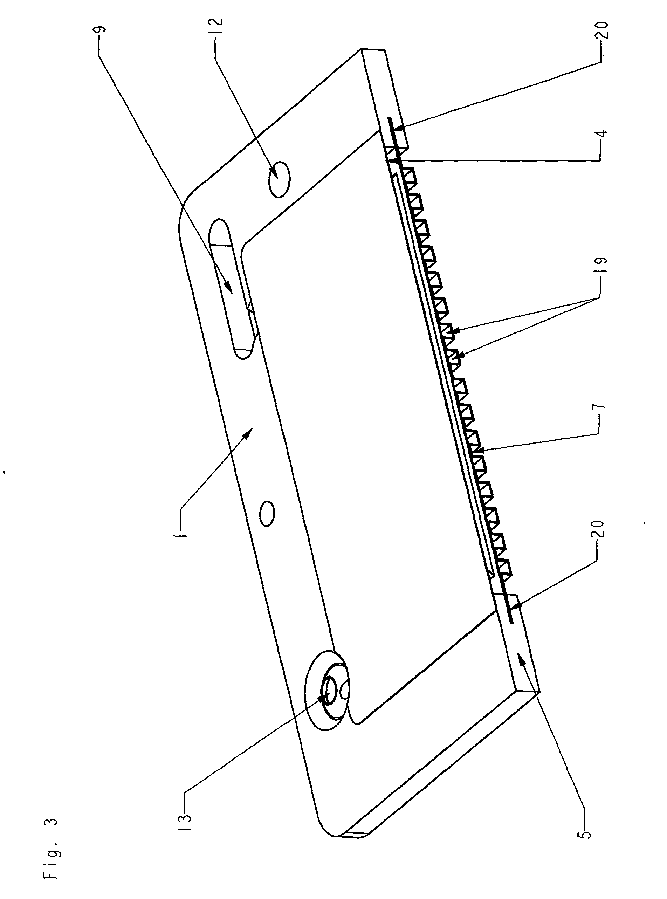

Figur 3 zeigt einen Schnitt durch ein erfindungsgemäßes Brennstoffzellenmodul.

Durch den Schnitt mitten durch das Brennstoffzellenmodul 1 werden in dem Metalleinlegeteil 7 die von ihm umschlossenen Kühlmittelkanäle 19 sichtbar. Diese sind u.a. mit dem im Rahmen 5 enthaltenen Kanal 13 für Kühlmittel verbunden, über den sie mit dem Kühlmittel versorgt werden.

Bei dem Rahmen 5 handelt es sich um ein einstückiges Spritzgußteil, mit dem das Metalleinlegeteil 7 in seinem Randbereich 20 umspritzt wurde.

Die MEA 3 überlappt im Bereich ihres Randes 4 mit dem Rahmen 5, wobei sie diesen jedoch nicht vollständig abdeckt. Im Bereich dieses Randes 4 ist die MEA 3, insbesondere die in ihrem Randbereich 4 ohne zusätzliche Schichten enthaltene Polymerelektrolyt-Membran, auf dem Rahmen 5 dichtgeschweißt. Dies erfolgte vorzugsweise durch Laserschweißen.

Des weiteren enthält der in Figur 3 gezeigte Teil des Rahmens 5 einen ersten Eingang 9 für ein Reaktionsgas (z.B. H₂), der auf eine Seite des Metalleinlegeteils 7 führt und einen Ausgang 12 für das andere Reaktionsgas (z.B. O₂), der mit der anderen Seite des Metalleinlegeteils 7 verbunden ist.

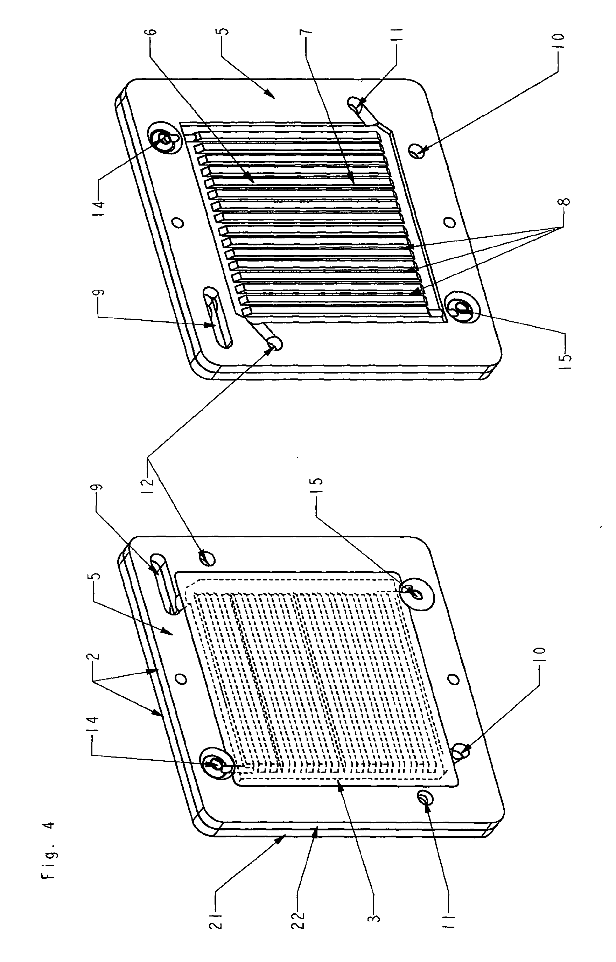

Figur 4 zeigt einen Teil eines erfindungsgemäßen Brennstoffzellen-Stacks, der aus zwei erfindungsgemäßen Brennstoffzellenmodulen gebildet wird.

Jeweils eine Bipolarplatte 2 steht im Stack mit einer ihrer Oberflächen im elektrischen Kontakt mit der Anode einer Brennstoffzelle des Stapels, während die gegenüberliegende Oberfläche mit der Katode der benachbarten Zelle kontaktiert ist. In Figur 4 ist links die Anodenseite einer Bipolarplatte und rechts die Katodenseite der im Stack darauf folgenden Bipolarplatte dargestellt. Auf der Anodenseite sind Ein- und Ausgang 9, 10 für ein Gas, Einund Ausgang 11, 12 für ein weiteres Gas, die Kanäle für Kühlmittel 14, 15 und die mit dem Rahmen 5 in ihrem Randbereich 4 verschweißte MEA 3 erkennbar. Auf der Katodenseite sind ebenfalls Ein- und Ausgänge 9, 10, 11, 12 und Kanäle 14, 15 ausgebildet. Ferner ist die Rückseite des von dem Rahmen 5 umgebenen Metalleinlegeteils 7 im inneren Bipolarplattenbereich 6 abgebildet, das Kanäle 8 zur Verteilung des über den Eingang 11 einströmenden Gases aufweist. Die zwei erfindungsgemäßen Brennstoffzellenmodule 21, 22 sind über die Rahmen 5 der beiden Bipolarplatten miteinander verpresst.

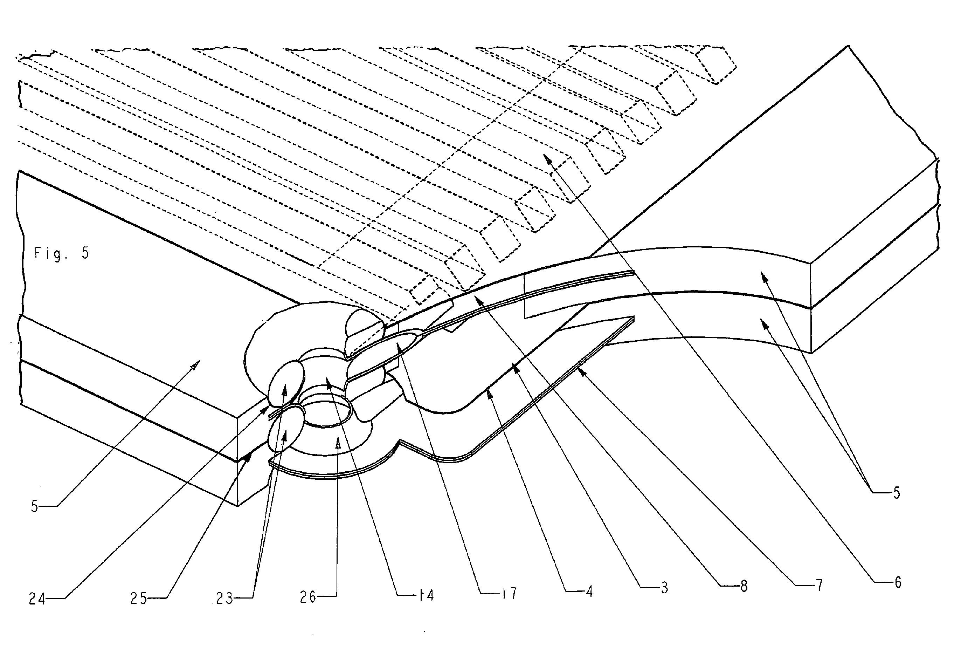

Figur 5 zeigt einen Schnitt durch zwei miteinander zu einem Brennstoffzellen-Stack verbundene erfindungsgemäße Brennstoffzellenmodule.

Der Schnitt liegt im Bereich eines Kanales 14 für Kühlmittel. In diesem Bereich sind in den Rahmen 5 Dichtungen 23 eingelassen, die den Kanal 14 umschließen. Diese ringförmigen Dichtungen 23 werden durch ringförmige Nuten 24 in den zwei aufeinander befestigten Rahmen 5 der beiden Bipolarplatten aufgenommen. Dadurch entsteht im Brennstoffzellen-Stack ein flüssigkeitsdichter Kanal 14 für das Kühlmittel, der sich axial durch den gesamten Brennstoffzellen-Stack erstreckt und von dem in jedem Brennstoffzellenmodul 1 jeweils ein halbschaliges Element 17 abzweigt, durch das der innere Bipolarplattenbereich 6 mit Kühlmittel versorgt wird. Die ringförmige Dichtung 23 ist vorzugsweise eine Elastomerdichtung, die an dem vorzugsweise thermoplastischen Rahmen 5 durch ein Spritzgießverfahren angespritzt wurde. Ferner dichtet ein Dichtungssteg 25 jeweils zwei Rahmen 5 gegeneinander ab.

Die Membran-Elektroden-Einheit 3 erstreckt sich über den gesamten inneren Bipolarplattenbereich 6 und zwischen je zwei Rahmen 5, wobei sie in ihrem Randbereich 4 mit einem Rahmen 5 verschweißt ist. Das Metalleinlegeteil 7 weist im Bereich der ringförmigen Dichtung 23 eine ringförmige Wölbung 26 auf, an der die Dichtung 23 dichtend anliegt. Des weiteren enthält das Metalleinlegeteil 7 Kanäle 8 für Gase.

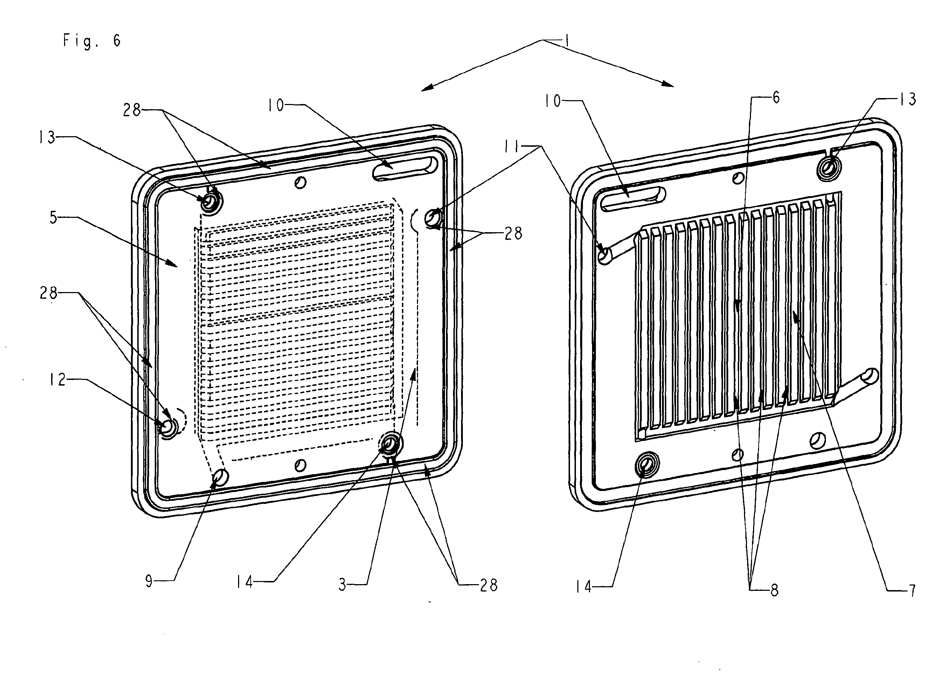

Figur 6 zeigt eine weitere Ausführungsform eines erfindungsgemäßen Brennstoffzellenmoduls mit einer die Membran-Elektroden-Einheit überlappenden Elastomerdichtung.

In der linken Hälfte der Figur ist die Anodenseite, in der rechten Hälfte ist die Katodenseite des Brennstoffzellenmoduls 1 dargestellt. Das Brennstoffzellenmoduls 1 weist einen Rahmen 5 und einen inneren Bipolarplattenbereich 6 auf. Der Rahmen 5 enthält Ein- und Ausgänge 9, 10, 11, 12 für die an der Brennstoffzellenreaktion beteiligten Gase und Kanäle 13, 14 für ein Kühlmittel. Im inneren Bipolarplattenbereich 6 befindet sich ein Metalleinlegeteil 7 mit beidseitig angeordneten Kanälen 8 für die Verteilung der Gase auf der Oberfläche und inneren (nicht sichtbaren) Kanälen für den Kühlmitteltransport.

Die MEA 3 bedeckt die gesamte Anodenseite und erstreckt sich bis zum inneren Rand der Nut 29. Die MEA 3 wird am Rahmen 5 durch eine mit diesem stoffschlüssig und/oder formschlüssig verbundene Elastomerdichtung 27 fixiert, die mit dem Rand der MEA 3 überlappt. Zusätzlich zu der Elastomerdichtung 27 sind weitere Dichtungen 28 an dem Rahmen 5 angebracht, die alle Ein- und Ausgänge 9, 10, 11, 12 und Kanäle 13, 14 anodenseitig umgeben.

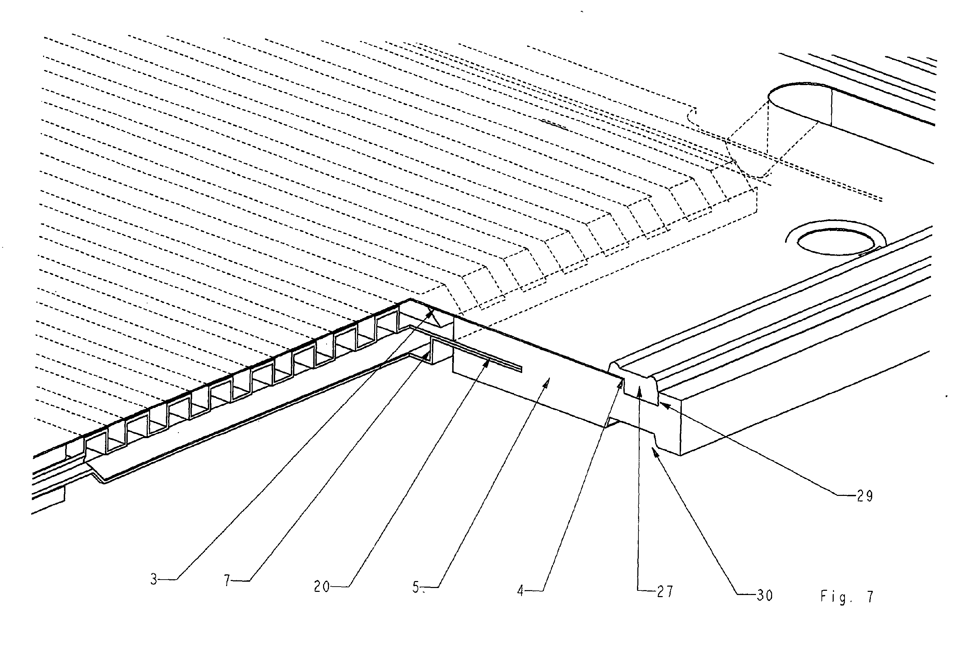

Figur 7 zeigt einen Schnitt durch das Brennstoffzellenmodul gemäß Figur 6 im Bereich der Elastomerdichtung.

Der Rahmen 5 weist auf seiner einen Seite (hier oben) im Randbereich eine umlaufende Nut 29 auf, in die die Elastomerdichtung 27 über einen Teil ihrer Breite eingelassen ist. Mit einem weiteren Teil ihrer Breite überlappt die Elastomerdichtung 27 die MEA 3, die auf die Anodenseite der Bipolarplatte aufgelegt ist. Dadurch wird die MEA 3 an dem Rahmen 5 der Bipolarplatte fixiert. Dabei liegt die Elastomerdichtung 27 vorzugsweise lediglich auf dem Rand 4 der MEA 3 auf und eine festere Fixierung wird erst bei der Montage eines Brennstoffzellen-Stacks erreicht, in dem die Elastomerdichtung 27 durch den im Stack nächstliegenden Bipolarplattenrahmen 5 an die MEA 3 angepresst wird. Vorzugsweise greift die Elastomerdichtung 27 bei der Montage eines Brennstoffzellen-Stacks in eine entsprechend geformte weitere umlaufende Nut 30 dichtend ein, in die in diesem Fall katodenseitig im Rahmen 5 der nächstliegenden Bipolarplatte ausgebildet ist. Somit entsteht einerseits eine stabile Fixierung der MEA 3 auf der Anodenseite der Bipolarplatte und andererseits eine zuverlässige Abdichtung der jeweiligen Brennstoffzellenmodule gegeneinander.

Der Rahmen 5 ist außerdem mit dem Randbereich 20 eines Metalleinlegeteils 7 verbunden, das den inneren Bipolarplattenbereich bildet und das ebenfalls durch die am Rahmen 5 fixierte MEA 3 überdeckt wird.

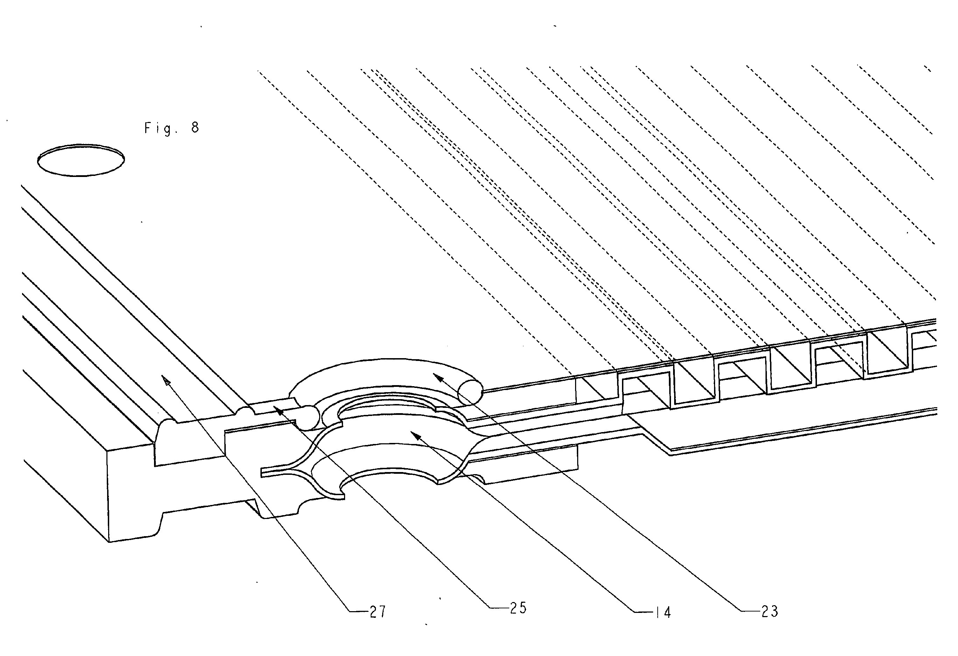

Figur 8 zeigt einen Schnitt durch das Brennstoffzellenmodul gemäß Figur 6 im Bereich des Kühlmittelkanals.

Zusätzlich zu der Elastomerdichtung 27 dienen weitere an den Rahmen 5 angespritzte Dichtungen der Abdichtung im Brennstoffzellen-Stack. Der Kühlmittelkanal 14 ist beispielsweise durch eine ringförmige Dichtung 23 umgeben, die über einen Dichtungssteg 25 mit der Elastomerdichtung 27 verbunden ist.

### Bezugszeichenliste

- 1: Brennstoffzellenmodul
- 2: Bipolarplatte
- 3: Membran-Elektroden-Einheit
- 4: Rand der Membran-Elektroden-Einheit
- 5: Rahmen der Bipolarplatte
- 6: innerer Bipolarplattenbereich
- 7: Metalleinlegeteil
- 8: Kanäle
- 9: erster Eingang (H₂)
- 10: erster Ausgang (H₂)
- 11: zweiter Eingang (O₂)
- 12: zweiter Ausgang (O₂)
- 13: erster Kanal für Kühlmittel
- 14: zweiter Kanal für Kühlmittel
- 15: erste Hälfte des Metalleinlegeteils
- 16: zweite Hälfte des Metalleinlegeteils
- 17: erstes halbschaliges Element
- 18: zweites halbschaliges Element
- 19: Kühlmittelkanäle
- 20: Randbereich des Metalleinlegeteils
- 21: erstes Brennstoffzellenmodul
- 22: zweites Brennstoffzellenmodul
- 23: ringförmige Dichtungen
- 24: ringförmige Nut
- 25: Dichtungssteg
- 26: ringförmige Wölbung
- 27: Elastomerdichtung
- 28: Dichtungen
- 29: erste umlaufende Nut
- 30: zweite umlaufende Nut

## Patentansprüche

1. Brennstoffzellenmodul (1) für PEM-Brennstoffzellenstacks, enthaltend eine Bipolarplatte (2) und eine Membran-Elektroden-Einheit (MEA) (3), wobei die Bipolarplatte (2) einen umlaufenden Rahmen (5) aus einem elektrisch nichtleitenden Werkstoff und einen von dem Rahmen (5) umschlossenen, elektrisch leitfähigen inneren Bipolarplattenbereich (6) mit Kanälen (8, 19) für Gase und ggf. für Kühlmittel aufweist und wobei die MEA (3), die eine Polymer-Elektrolyt-Membran umfasst, durch eine Schweißnaht oder durch eine mit der MEA (3) teilweise überlappende umlaufende Elastomerdichtung (27) anodenseitig an dem Rahmen (5) der Bipolarplatte (2) fixiert ist.

2. Brennstoffzellenmodul (1) gemäß Anspruch 1, **dadurch gekennzeichnet, dass** der innere Bipolarplattenbereich (6) metallische Bleche enthält, die Strukturen für die Gasverteilung und die Kühlung aufweisen.

3. Brennstoffzellenmodul gemäß Anspruch 1 oder 2, **dadurch gekennzeichnet, dass** der innere Bipolarplattenbereich (6) ein elektrisch leitfähiges Polymer enthält.

4. Brennstoffzellenmodul gemäß einem der Ansprüche 1 bis 3, **dadurch gekennzeichnet, dass** der Rahmen (5) einstückig um den inneren Bipolarplattenbereich (6) angeformt ist.

5. Brennstoffzellenmodul gemäß einem der Ansprüche 1 bis 4, **dadurch gekennzeichnet, dass** der nichtleitende Werkstoff ein elektrisch nichtleitender, ggf. verstärkter Thermoplast oder Duroplast ist.

6. Brennstoffzellenmodul gemäß einem der Ansprüche 1 bis 5, **dadurch gekennzeichnet, dass** der nichtleitende Werkstoff ein Polymer aus der Gruppe PPS, LCP, POM, PAEK, PA, PBT, PPO, PP oder PES ist.

7. Brennstoffzellenmodul gemäß einem der Ansprüche 1 bis 6, **dadurch gekennzeichnet, dass** der Rahmen (5) Versorgungs- und Verteilungskanäle (9, 10, 11, 12, 13, 14) für Flüssigkeiten und Gase aufweist.

8. Verfahren zur Herstellung eines Brennstoffzellenmoduls (1) gemäß einem der Ansprüche 1 bis 7, **dadurch gekennzeichnet, dass** die MEA (3) mit dem Rahmen (5) durch ein Schweißverfahren verbunden wird.

9. Verfahren zur Herstellung eines Brennstoffzellenmoduls (1) gemäß einem der Ansprüche 1 bis 7, **dadurch gekennzeichnet, dass** die Elastomerdichtung (27) durch Spritzgießen eines Elastomers an den Rahmen (5) angespritzt wird, so dass sie teilweise mit dem Rahmen (5) stoffschlüssig und/oder formschlüssig verbunden wird und teilweise mit der auf den Rahmen (5) aufgelegten MEA (3) überlappt.

10. Brennstoffzellenstack mit mindestens zwei Brennstoffzellenmodulen (21, 22) gemäß einem der Ansprüche 1 bis 7, wobei die Brennstoffzellenmodule (21, 22) über die Rahmen (5) miteinander verbunden sind und die Brennstoffzellenmodule (21, 22) gegeneinander über die Elastomerdichtung (27) und/oder zusätzliche an den Rahmen (5) angebrachte Dichtungselemente (23, 25, 28) gasdicht abgedichtet sind.
